Europäisches Patentamt

European Patent Office

Office européen des brevets

(19)

(11) Veröffentlichungsnummer: **0 491 223 A1**

## (12) EUROPÄISCHE PATENTANMELDUNG

(21) Anmeldenummer: **91120725.6**

(22) Anmeldetag: **03.12.91**

(51) Int. Cl.5: **F16H 25/20**, F16H 25/24

(30) Priorität: **18.12.90 DE 9017035 U**

(43) Veröffentlichungstag der Anmeldung:
**24.06.92 Patentblatt 92/26**

(84) Benannte Vertragsstaaten:
**AT BE CH DE FR GB IT LI NL**

(71) Anmelder: **NADELLA-Wälzlager GmbH**
**Tränkestrasse 7**
**W-7000 Stuttgart 70 Degerloch(DE)**

(72) Erfinder: **Fritz, Robert G.**
**Blankensteinstrasse 1**
**W-7127 Pleidelsheim(DE)**

(74) Vertreter: **Patentanwälte Phys. Bartels**
**Dipl.-Ing. Fink Dr.-Ing. Held**
**Lange Strasse 51**
**W-7000 Stuttgart 1(DE)**

(54) **Linearführung mit Spindelantrieb.**

(57) 2. Die Erfindung betrifft eine Vorrichtung zum Verfahren eines Schlittens (10) längs einer antreibbaren Welle (12), die ein Gewinde aufweist, das in Eingriff ist mit mindestens einem an Schlitten angeordneten Eingriffsmittel. Dadurch, daß das Eingriffsmittel (46) um eine Achse drehbar ist, ist die Reibung zwischen dem Eingriffsmittel und der antreibbaren Welle verringert, was einen besonders ruhigen und spielfreien Lauf für den Schlitten (10) ergibt.

Fig.1

EP 0 491 223 A1

Die Erfindung betrifft eine Vorrichtung zum Verfahren eines Schlittens längs einer antreibbaren Welle, die ein Gewinde aufweist, das in Eingriff ist mit mindestens einem am Schlitten angeordneten Eingriffsmittel.

Dahingehend bekannte Vorrichtungen, die man auch als sogenannte Linearführungen bezeichnet, weisen als antreibbare Welle eine Kugelumlaufspindel auf, deren Gewinde in Form eines Außengewindes in Eingriff mit einem am Schlitten angeordneten Eingriffsmittel ist, das in Form einer mit dem Schlitten verbundenen Gewindemutter die Kugelumlaufspindel umschließt. Mit dieser bekannten Anordnung wird die Drehbewegung der Welle in eine Linearbewegung des Schlittens umgewandelt, wobei der Schlitten dann beispielsweise Materialtransporte und/oder Zustellbewegungen ausführt.

Diese Art der bekannten Vorrichtungen ist sehr teuer in der Herstellung, denn um einen spielfreien Lauf des Schlittens zu erreichen, ist eine äußerst präzise Herstellung der Kugelumlaufspindel sowie der zugehörigen Gewindemutter notwendig.

Eine andere Art von bekannten Vorrichtungen weist als sogenannte Linearantriebe Ketten, Zahnriemen sowie Zahnstangen mit Ritzeln auf. Diese Vorrichtungen sind zwar kostengünstiger herzustellen, deren Genauigkeit, was den spielfreien Lauf des Schlittens anbelangt, läßt aber in der Regel zu wünschen übrig.

In der US-PS 3 858 452 ist für einen spielfreien Eingriff des Eingriffsmittels des Schlittens in das Gewinde der antreibbaren Welle als Eingriffsmittel ein Gewindesegment vorgesehen, das mittels Federkraft in Anlage mit der antreibbaren Welle gehalten ist, die in Anlage mit einer sie abstützenden Führung einer Schiene ist, die parallel zur Welle sich erstreckt. Dies erlaubt zwar einen nahezu spielfreien Lauf des Schlittens, der allerdings, wie auch bei den anderen bekannten Vorrichtungen, durch die auftretenden Reibkräfte zwischen Eingriffsmittel und Welle beeinträchtigt ist.

Ausgehend von diesem Stand der Technik liegt der Erfindung die Aufgabe zugrunde, eine Vorrichtung zum Verfahren eines Schlittens zu schaffen, die günstig in der Herstellung ist sowie einen spielfreien Lauf höchster Genauigkeit des Schlittens gewährleistet. Diese Aufgabe löst eine Vorrichtung mit den Merkmalen des Anspruches 1.

Dadurch, daß gemäß der Erfindung das Eingriffsmittel um eine Achse drehbar ist, kann das Eingriffsmittel und die Lagerung desselben konstruktiv einfach und damit kostengünstig hergestellt werden. Durch die freie Bewegbarkeit des Eingriffsmittels um seine Achse sind die Reibkräfte zwischen dem Eingriffsmittel und dem Gewinde der Welle auf ein Minimum reduziert, was einen spielfreien Lauf höchster Genauigkeit ermöglicht.

Bei einer bevorzugten Ausführungsform der erfindungsgemäßen Vorrichtung ist zumindest innerhalb des Verfahrweges des Schlittens die Welle zumindest teilweise in Anlage mit einer sie abstützenden Führung einer Schiene, die parallel zur Welle sich erstreckt. Dank dieser die Welle abstützenden Führung kann die antreibbare Welle trotz großer Baulänge mit kleinen Durchmessern ausgeführt sein, wobei selbst bei großen Verfahrgeschwindigkeiten des Schlittens und damit großer Antriebsdrehzahl der Welle das Eintreten der kritischen Drehzahl vermeidbar ist, die den spielfreien Lauf der Anordnung üblicherweise beeinträchtigt. Auch kann der jeweilige Antrieb für die erfindungsgemäße Vorrichtung dann schwächer dimensioniert sein, was wiederum dem spielfreien Lauf des Schlittens zugute kommt. Das spielt eine Rolle, wenn dieser genau positioniert werden muß, um beispielsweise eine genaue Fertigung der mit ihm zu transportierenden Werkstücke od.dgl. zu gewährleisten.

Bei einer weiteren bevorzugten Ausführungsform der erfindungsgemäßen Vorrichtung ist die Welle von der sie abstützenden Führung zumindest teilweise umschlossen und im Bereich der nicht umfaßten Teile der Welle ist der Eingriff mit dem Eingriffsmittel des Schlittens vorgesehen. Hierdurch ist die Welle in ihrer Lage derart abgestützt, daß sie bei ihrer Drehbewegung keine die präzise Führung und die Spielfreiheit störenden Auslenkbewegungen quer zur Längserstreckung der sie abstützenden Führung ausführt. Der Eingriff des Eingriffsmittels des Schlittens im Bereich der freigebliebenen Teile der Welle führt zu einem platzsparenden Aufbau der Vorrichtung.

Bei einer Ausführungsform der erfindungsgemäßen Vorrichtung ist das Eingriffsmittel ein Gewindesegment. Dieses dann drehbare Gewindesegment kann auch zumindest teilweise die Form einer Schraubenlinie aufweisen. Auch wenn dies mit einer erhöhten Reibung zwischen Eingriffsmittel und Gewinde der Welle einhergeht, ist im wesentlichen immer noch ein spielfreier Betrieb erreichbar. Zur weiteren Verminderung der Reibung ist es, vorzugsweise vorgesehen, daß das Eingriffsmittel zumindest teilweise aus mit Molybdändisulfit angereichertem Kunststoff besteht.

Bei einer besonders bevorzugten Ausführungsform der erfindungsgemäßen Vorrichtung ist das Eingriffsmittel unter einer vorgebbaren Vorspannung und federnd nachgiebig in Eingriff mit dem Gewinde der Welle. Dies erlaubt besonders beim Anfahren des Schlittens einen hemmungsfreien Betrieb desselben.

Vorzugsweise ist die abstützende Führung aus einer Kunststoffleiste gebildet, die eine Ausnehmung aufweist, deren Querschnitt dem Querschnitt der von ihr aufzunehmenden Welle angepaßt ist. Neben einem platzsparenden Aufbau ist, insbesondere, sofern die abstützende Führung aus einem Kunststoff gebildet ist, der sich für einen Trockenlauf eignet, ein schonender Betrieb mit geringen Reibkräften gewährleistet.

Bei einer weiteren besonders bevorzugten Ausführungsform der erfindungsgemäßen Vorrichtung weist diese eine Abdeckeinrichtung zum Schutz der Welle auf. Hierdurch läßt sich ein die Funktion des Gewindetriebes schädigender Einfluss durch Schmutzteile vermeiden.

Vorzugsweise weist hierbei die Abdeckeinrichtung zwei elastisch längs der Schiene verlaufende Abdeck-Leistenteile auf, die mit einer vorgebbaren Vorspannung aneinanderliegen und die sich mittels mindestens eines Betätigungsorgans des Schlittens zumindest voneinander wegbewegen lassen.

Auf diese Art und Weise öffnet sich in Verfahrrichtung des Schlittens gesehen die Abdeckeinrichtung und schließt sich automatisch wieder, sobald die Stelle des Eingriffs von dem Eingriffsmittel mit dem Gewinde der Welle die durch die Abdeckeinrichtung freigegebene Stelle passiert hat. Ist der Schlitten größer dimensioniert als die von der Abdeckeinrichtung freigegebene Stelle, ist das Eindringen von Schmutzteilen in den Gewindetrieb mit Sicherheit vermieden.

Vorzugsweise bilden hierbei die beiden aneinanderliegenden Abdeck-Leistenteile eine Wölbung miteinander, in die zumindest teilweise die Welle hineinragt, was wiederum einen platzsparenden Aufbau der erfindungsgemäßen Vorrichtung gewährleistet. Im übrigen ist durch das Verhindern des Schmutzeintritts der spielfreie Lauf sichergestellt.

Im folgenden wird die erfindungsgemäße Vorrichtung zum Verfahren eines Schlittens an Hand der Figurenbeschreibung und einzelner Ausführungsbeispiele näher erläutert, wobei die Schnitt- und Seitenansichtsdarstellungen der Einfachheit halber teilweise auch in Ansicht bzw. im Schnitt wiedergegeben sind.

Es zeigen:

Fig. 1 und 2    eine Seitenansicht bzw. eine Schnittdarstellung längs der Linie Y - Y in Fig.1 eines ersten Ausführungsbeispiels der Vorrichtung mit Abdeckeinrichtung;

Fig. 3 bis 7    in derselben numerisch aufsteigenden Reihenfolge Schnittdarstellungen längs der Linien I bis V in Fig.2;

Fig. 8    ein zweites Ausführungsbeispiel der erfindungsgemäßen Vorrichtung, sofern man den Gegenstand der Fig.8 in den Kreis gemäß der Fig.1 überträgt;

Fig.9 und 10    eine Schnittdarstellung längs der Linie Z - Z in Fig.10 bzw. eine Seitenansicht eines dritten Ausführungsbeispieles der erfindungsgemäßen Vorrichtung.

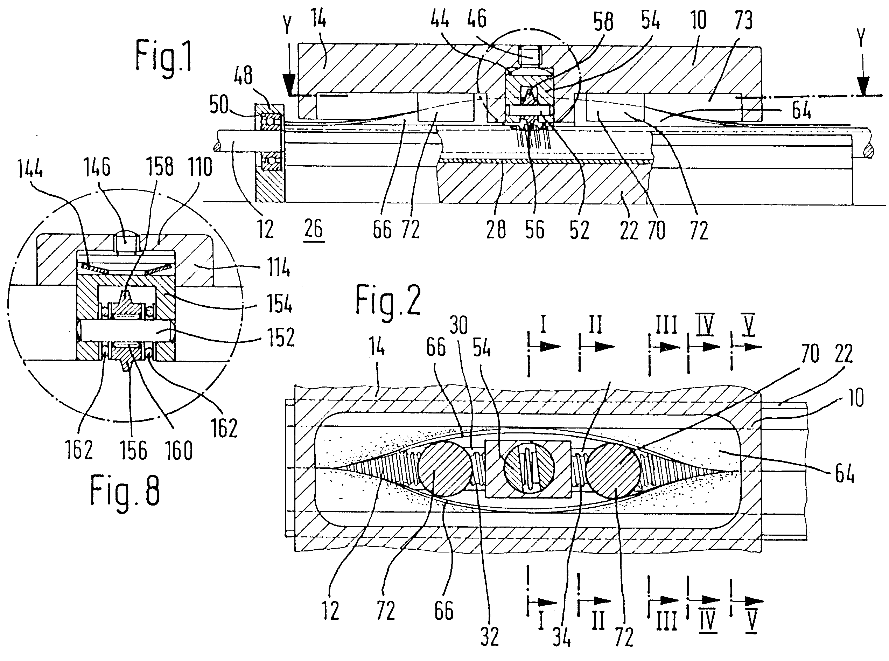

Das erste Ausführungsbeispiel der erfindungsgemäßen Vorrichtung gemäß den Fig.1 und 2 weist einen mit 10 bezeichneten Schlitten auf, der längs einer antreibbaren Welle 12 verfahrbar ist. Der Schlitten 10 weist eine Wagenplatte 14 zum Transportieren von Gegenständen auf. Die Wagenplatte 14 ist mit vier Führungsrollen 16 versehen, deren um eine Achse drehbaren Führungsflächen 18 jeweils in Anlage mit einer Längsführung 20 einer Schiene 22 sind. Ein Führungssystem, bestehend aus einem oder mehreren Schlitten 10 mit vier Führungsrollen 16, die in Anlage sind mit den in einer Schiene 22 aufgenommenen beiden stabartigen Längsführungen 20, ist bekannt und wird daher nicht näher beschrieben.

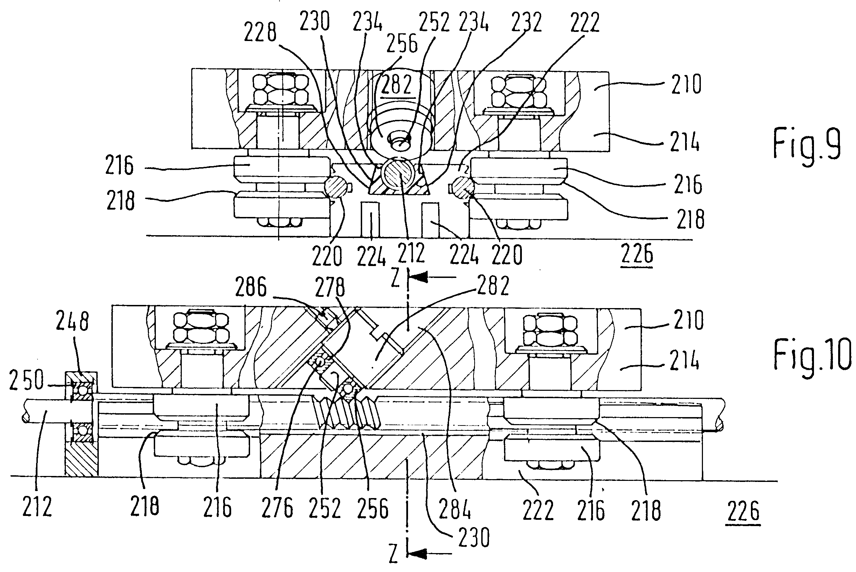

Die Schiene 22 verläuft über eine vorgebbare Wegstrecke, deren Länge durch den gewünschten Verfahrweg des Schlittens 10 bestimmt ist. Die Laufschienen können aus Stahl hergestellt sein oder aus sogenannten Stahlverbundschienen, bei welchen die Führungsbahnen aus gehärtetem Stahl und die Tragkörper aus stranggepreßtem Aluminium, Kunststoff od.dgl. hergestellt werden können. An ihrer Unterseite weist die Schiene 22 Aussparungen (s.224 in Fig.9) auf, die zum Festlegen der Schiene 22 auf einem feststehenden Untergrund 26 mittels Verbindungsmittel (nicht dargestellt), wie Schrauben, dienen. Die Schiene 22 weist an ihrer der Wagenplatte 14 benachbarten Oberseite eine Aussparung in Form einer im Querschnitt trapezförmigen Nut 28 auf, in die sich die Welle 12 einlegen läßt.

Als abstützende Führung ist in die Nut 28 eine Kunststoffleiste 30 eingefügt, deren Kunststoffmaterial derart gewählt ist, daß gute Trockenlaufeigenschaften gegeben sind.

Die Außenkontur der Kunststoffleiste 30 ist im Querschnitt der Nut 28 angepaßt und ihre der Nut 28 zugekehrten Außenwände sind in Anlage mit den entsprechend benachbart gegenüberliegenden Wänden derselben. Die der Wagenplatte 14 benachbart gegenüberliegend angeordnete Oberseite der Kunststoffleiste 30 schließt bündig mit der Oberseite der Schiene 22 ab. Die Kunststoffleiste 30 erstreckt sich über die gesamte Länge der vorgesehenen Schiene 22, die auch aus einzelnen Schienensegmenten (nicht dargestellt) blockweise zusammengesetzt sein kann.

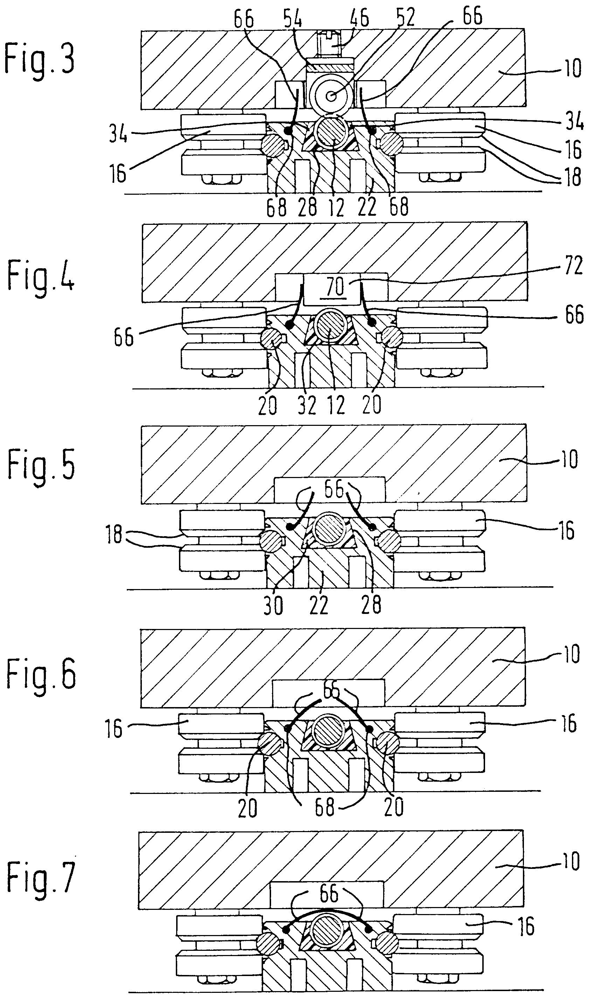

Im Inneren der Kunststoffleiste 30 ist eine konkave Ausnehmung 32 vorhanden, die an der Oberseite der Schiene 22 ins Freie tritt und deren Querschnitt dem kreisrunden Querschnitt der antreibbaren Welle 12 angepaßt ist. Die in der Ausnehmung 32 aufgenommene Welle 12 weist ein Außengewinde auf, das in Anlage ist mit der durch die Ausnehmung 32 gebildeten Innenfläche der Kunststoffleiste 30. Die diesbezügliche Welle 12 mit Außengewinde wird im folgenden kurz als "Gewindelaufspindel" bezeichnet. Die Gewindelaufspindel 12 ist, wie dies insbesondere die Fig.3 zeigt, von zwei Flanken 34 der Kunststoffleiste 30 derart teilweise umschlossen, daß die Gewindelaufspindel 12 innerhalb der Kunststoffleiste 30 gehalten wird. Im Querschnitt gesehen umgreift die Kunststoffleiste 30 also klammerartig die Gewindelaufspindel 12 und hält deren Längsachse parallel zu der Längsachse der abstützenden Führung, so daß selbst bei entsprechend hohen Drehzahlen der Gewindelaufspindel 12 diese präzise innerhalb der Kunststoffleiste 30 als abstützende Führung gehalten ist.

An dem ins Freie mündenden Ende der Ausnehmung 32 ragt die Gewindelaufspindel mit etwa 30 % ihres Durchmessers (Fig.9) aus der Kunststoffleiste 30 und damit auch von der Oberseite der Schiene 22 hervor. Der Bereich der nicht von der Kunststoffleiste 30 als abstützende Führung umschlossenen Teile der Gewindelaufspindel 12 stehen mithin frei für den Eingriff eines Eingriffsmittels, das am Schlitten 10 angebracht ist und das im folgenden noch näher beschrieben wird.

Die Gewindelaufspindel 12 ist endseitig in entsprechend angepaßten Lagerböcken 48 gelagert, von denen in Fig.1 in Blickrichtung gesehen der äußerst linke dargestellt ist. Zur Lagerung der Gewindelaufspindel 12 in dem jeweiligen Lagerbock 48 dienen Lager 50 (Fig.1). Das Lagern von Laufspindeln in Lagerböcken ist bekannt, so daß hierauf nicht näher mehr eingegangen zu werden braucht. Das in Fig.1 gesehen linke Ende der Gewindelaufspindel 12 ist abgebrochen dargestellt und wäre in bekannter und daher nicht näher beschriebener Weise mit einem Antriebsaggregat, beispielsweise in Form eines Elektromotors, für den Antrieb der Gewindelaufspindel 12 verbindbar. Je nach Drehrichtung der Gewindelaufspindel 12 wird dann der Schlitten 10 in Fig.1 gesehen sich nach rechts bzw. links bewegen. Damit der Schlitten 10 nicht an die Lagerböcke 48 stößt, kann eine Abschaltautomatik vorgesehen sein, die nach Überfahren einer vorgebbaren Position des Schlittens 10 den Antrieb abschaltet.

Das Gewinde der Gewindelaufspindel 12 kann auch mehrgängig sein. Anstelle der Kunststoffleiste 30 könnte die Gewindelaufspindel 12 auch unmittelbar in einer ihrem Querschnitt angepaßten Ausnehmung geführt sein, die aus der Schiene 22 gebildet ist, insbesondere wenn die Gewindelaufspindel ein Gewinde aus Kunststoff aufweist und der Schlitten mit geringen Drehzahlen der Spindel verfahren wird. Bei dem Ausführungsbeispiel gemäß den Fig.1 und 2 ist die abstützende Führung 30 aus einer durchgehenden Kunststoffleiste gebildet. Diese könnte auch unterbrochen sein, so daß in vorgebbaren Abständen voneinander einzelne Leistensegmente (nicht dargestellt) die Abstützung übernehmen. Korrespondierend könnte dann auch die Schiene 22 durchgehende Unterbrechungen aufweisen, was zu einer Art Brückenkonstruktion führt, bei der die Leistensegmente in Verbindung mit der unterbrochenen Schiene eine Art Brückenpfeiler für die durchgehende Gewindelaufspindel 12 ausbilden.

Bei dem ersten Ausführungsbeispiel gemäß den Fig.1 und 2 ist das Eingriffsmittel des Schlittens 10 um eine Achse 52 drehbar angeordnet. Diese Achse 52 ist mit einem Gabelstück 54 (Fig.1) verbunden, das in einer seiner Form angepaßten Aussparung im Schlitten 10 aufgenommen ist, der der einfacheren Darstellung wegen in den Fig.1 und 2 ohne Führungsrollen 16 und ohne Längsführungen 20 gezeigt ist. Innerhalb des von den Gabelteilen des Gabelstückes 54 umfaßten Raumes ist eine auf der Achse 52 drehbar angeordnete Tellerrolle 56 vorhanden, die mit ihrem Tellerrand 58 einen Vorsprung ausbildet, der in das Gewinde der Gewindelaufspindel 12 eingreift. Der Tellerrand 58 steht wiederum mittels einer Tellerfeder 44 mit einer vorgebbaren Vorspannung über die Einstellschraube 46 und elastisch nachgiebig in Eingriff mit dem Gewinde der Gewindelaufspindel 12. Der diesbezügliche Eingriff ist spielfrei und die diesbezüglich auftretende Rollreibung äußerst gering gegenüber bekannten Konstruktionen.

Das erste Ausführungsbeispiel gemäß den Fig.1 und 2 weist eine Abdeckeinrichtung 64 auf, um die Gewindelaufspindel 12 vor Verschmutzungen zu schützen. Wie dies insbesondere die Fig.3 bis 7 offenbaren, weist diese Abdeckeinrichtung 64 zwei elastisch längs der Schiene 22 verlaufende Abdeck-Leistenteile 66 auf, die jeweils an einem ihrer beiden Enden eine durchgehend verlaufende, wulstartige Verdickung 68 haben, mit der sie zu ihrer Lagefixierung in der Schiene 22 in entsprechend geformte Kanäle, die parallel zur Gewindelaufspindel 12 verlaufen, eingreifen. Die aus Gummi bestehenden Abdeck-Leistenteile (Gummibänder) 66 liegen mit einer vorgebbaren Vorspannung aneinander und lassen sich mittels eines Betätigungsorgans 70 des Schlittens 10 entsprechend betätigen. Dieses Betätigungsorgan 70 besteht im wesentlichen aus zwei Zylinderelementen 72, die an der Unterseite der Wagenplatte 14 in einer Vertiefung 73 derselben angebracht sind und die in eine Öffnung (Fig.1) eingreifen, die von den freien Rändern der auseinanderbewegten Abdeck-Leistenteile 66 umgrenzt ist.

Wird der in Fig.2 teilweise dargestellte Schlitten 10 in Blickrichtung nach rechts bewegt, ergeben sich mit der Fig.7 beginnend hintereinander die bis Fig.3 dargestellten Abläufe. Dank des in Blickrichtung auf Fig.2 gesehen rechts angeordneten Zylinderelementes 72 stellen sich die beiden Abdeck-Leistenteile 66 hoch und geben den Weg frei für das Durchfahren des mit dem Gewinde der Gewindelaufspindel 12 im Eingriff befindlichen Eingriffsmittels, hier in Form der Tellerrolle 56. Ferner werden die auf der Abdeckeinrichtung 64 liegenden Schmutzteile zur Seite wegbefördert. Das andere Zylinderelement 72 gewährleistet wiederum ein reibungsloses Umklappen der beiden Abdeck-Leistenteile 66 in ihre abdichtende Ausgangsstellung, die durch ihre Eigenspannung sich dichtend aneinanderlegen. Deckt der Schlitten 10, wie in Fig.2 dargestellt, die freigegebene Öffnung vollständig ab, ist ein Verschmutzen der Gewindelaufspindel 12 und damit des Gewindetriebes auch an der Stelle der von den Abdeck-Leistenteilen 66 freigegebenen Öffnung ausgeschlossen. Die vorgebbare Vorspannung, mit der die Abdeck-Leistenteile 66 mit ihren freien Rändern aneinandergelegt sind, kann auch den Wert "0" einnehmen. Wie sich aus der Fig.2 ersehen läßt, ist das Zylinderelement 72, das das Herstellen der Öffnung ermöglicht, dasjenige Element, das ein kontrolliertes Schließen erlaubt, sofern die Bewegungsrichtung des Schlittens 10 sich umkehrt.

Wie sich insbesondere aus der Fig.7 ersehen läßt, bilden die beiden aneinanderliegenden Abdeck-Leistenteile 66 aufgrund ihrer Eigenspannung eine Wölbung miteinander aus, in die die Gewindelaufspindel 12 teilweise hineinragt, was einen besonders platzsparenden Aufbau darstellt. Die im Zusammenhang mit dem ersten Ausführungsbeispiel vorgestellte Abdeckeinrichtung 64 läßt sich entsprechend angepaßt auch für die anderen Ausführungsbeispiele zur Anwendung bringen.

Die nachfolgenden Ausführungsbeispiele werden nur insoweit noch beschrieben, als sie sich vom ersten Ausführungsbeispiel gemäß den Fig.1 und 2 unterscheiden, wobei diejenigen Teile, die gleich sind mit den Teilen gemäß dem ersten Ausführungsbeispiel mit denselben, jeweils um 100 erhöhten Bezugsziffern wiedergegeben sind.

Noch geringer sind die angesprochenen Reibungsverluste, wenn die der Tellerrolle 56 entsprechende Tellerrolle 156 gemäß Fig.8 auf der Achse 152 mittels einem Nadellager 160 gelagert ist und die axiale Abstützung auf der Achse 152 durch entsprechende Axiallager 162 erfolgt, die zwischen den Enden der Tellerrolle 156 und Gabelteilen des Gabelstückes 154 angeordnet sind.

Bei dem dritten Ausführungsbeispiel gemäß den Fig.9 und 10 hat das Gewinde der Gewindelaufspindel 212 einen Flankenwinkel von 45°. Um etwaige Fertigungsungenauigkeiten auszugleichen, sind hierbei die Flanken des Gewindes der Gewindelaufspindel 212 ballig ausgeführt. Als Eingriffsmittel dient bei diesem Ausführungsbeispiel der Laufring 256 eines Kugellagers 276, dessen innerer Ring 278 auf einem Längszapfen 252 angeordnet ist, dessen Längsachse mit der Längsachse der Gewindelaufspindel 212 einen Winkel von 45° einschließt. Dieser Längszapfen 252 ist Teil eines zylindrischen Gewindeeinsatzes 282, der, wie sich insbesondere aus der Fig.10 ersehen läßt, in eine Bohrung 284 mit entsprechendem Gewinde einschraubbar ist. Der Außenumfang des zylindrischen Gewindeeinsatzes 282 ist etwas größer bemessen als der am Laufring 256 gemessene Außendurchmesser des Kugellagers 276. Nachdem über das Verstellen des Gewindeeinsatzes 282 die Flankenpressung zwischen Gewinde der Gewindelaufspindel 212 und dem Laufring 256 des Kugellagers 276 eingestellt ist, läßt sich der Gewindeeinsatz 282 mittels der Feststellschraube 286 in seiner Lage und damit die Flankenpressung festlegen. Die in den Fig.9 und 10 gezeigte Lösung benötigt nur geringe Verstellkräfte des Antriebes für eine Bewegung des Schlittens 210. Die vorstehend genannten Lösungen lassen sich auch mit sog. gerollten Gewindelaufspindeln realisieren, was die erfindungsgemäße Vorrichtung äußerst preiswert macht.

Die angesprochenen erfindungsgemäßen Linearführungen sind besonders geeignet für einen horizontalen und äußerst präzisen Transport von Lasten. Die vorgestellten Anordnungen lassen sich aber auch schräg zu der horizontalen Ebene verlaufend betreiben und mit geringen Lasten sogar vertikal.

Die vorstehende Beschreibung und die Zeichnung beschränken sich nur auf die Angabe von Merkmalen, die für die beispielsweise Verkörperung der Erfindung wesentlich sind. Soweit daher Merkmale in der Beschreibung und in der Zeichnung offenbart und in den Ansprüchen nicht genannt sind, dienen sie erforderlichenfalls auch zur Bestimmung des Gegenstandes der Erfindung.

## Patentansprüche

1. Vorrichtung zum Verfahren eines Schlittens (10,110,210) längs einer antreibbaren Welle (12,112,212), die ein Gewinde aufweist, das in Eingriff ist mit mindestens einem am Schlitten angeordneten Eingriffsmittel, dadurch gekennzeichnet, daß das Eingriffsmittel (56,156,256) um eine Achse drehbar ist.

2. Vorrichtung nach Anspruch 1, dadurch gekennzeichnet, daß zumindest innerhalb des Verfahrweges des Schlittens (10, 110,210) die Welle (12,112,212) zumindest teilweise in Anlage mit einer sie abstützenden Führung einer Schiene (22,122,222) ist, die parallel zur Welle sich erstreckt.

**3.** Vorrichtung nach Anspruch 2, dadurch gekennzeichnet, daß die Welle (12,112,212) von der sie abstützenden Führung zumindest teilweise umschlossen ist und daß im Bereich der nicht umfaßten Teile der Welle der Eingriff mit dem Eingriffsmittel des Schlittens (10,110,210) vorgesehen ist.

**4.** Vorrichtung nach Anspruch 1 oder 2, dadurch gekennzeichnet, daß das Eingriffsmittel ein Gewindesegment ist.

**5.** Vorrichtung nach einem der Ansprüche 1 bis 4, dadurch gekennzeichnet, daß das Eingriffsmittel zumindest teilweise aus mit Molybdändisulfit angereichertem Kunststoff besteht.

**6.** Vorrichtung nach einem der Ansprüche 1 bis 5, dadurch gekennzeichnet, daß das Eingriffsmittel (56,156,256) unter einer vorgebbaren Vorspannung und federnd nachgiebig in Eingriff mit dem Gewinde der Welle (12,112,212) ist.

**7.** Vorrichtung nach einem der Ansprüche 2 bis 6, dadurch gekennzeichnet, daß die abstützende Führung aus einer Kunststoffleiste (30,130,230) gebildet ist, die eine Ausnehmung (32,132,232) aufweist, deren Querschnitt dem Querschnitt der von ihr aufzunehmenden Welle (12,112, 212) angepaßt ist.

**8.** Vorrichtung nach einem der Ansprüche 1 bis 7, dadurch gekennzeichnet, daß diese eine Abdeckeinrichtung (64) zum Schutz der Welle (12) aufweist.

**9.** Vorrichtung nach Anspruch 8, dadurch gekennzeichnet, daß die Abdeckeinrichtung (64) zwei elastisch längs der Schiene (22) verlaufende Abdeck-Leistenteile (66) aufweist, die mit einer vorgebbaren Vorspannung aneinanderliegen und die sich mittels mindestens eines Betätigungsorgans (70) des Schlittens (10) zumindest voneinander wegbewegen lassen.

**10.** Vorrichtung nach Anspruch 9, dadurch gekennzeichnet, daß die beiden aneinanderliegenden Abdeck-Leistenteile (66) eine Wölbung miteinander bilden, in die zumindest teilweise die Welle (12) hineinragt.

Fig.1

Fig.2

Fig.8

Fig.3

Fig.4

Fig.5

Fig.6

Fig.7

Fig.9

Fig.10

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-B-1 259 675 (CINCINNATI MILLING MACHINE) | 1,2,3 | F16H25/20 |
| Y | * Spalte 5, Zeile 3 - Zeile 51; Ansprüche 1,2; Abbildungen 1-3 * | 4,5,6,8 | F16H25/24 |
| | --- | | |
| Y | FR-A-2 479 936 (THOMSON-CSF) * Seite 3, Zeile 32 - Seite 4, Zeile 32; Anspruch 1; Abbildungen 2,3,5 * | 4,6 | |
| | --- | | |
| Y | PATENT ABSTRACTS OF JAPAN vol. 10, no. 155 (M-485)4. Juni 1986 & JP-A-61 010 158 ( NTN TOYO BEARING ) 17. Januar 1986 * Zusammenfassung * | 5 | |
| | --- | | |
| Y | EP-A-0 086 885 (PROMA PRODUCT) * Zusammenfassung; Anspruch 4; Abbildung 1 * | 8 | |
| | --- | | |
| X | FR-A-2 104 490 (GILGEN) * Seite 2, Zeile 27 - Seite 3, Zeile 9; Ansprüche 1,7,8; Abbildungen 1,2 * | 1,2,3 | |
| | --- | | **RECHERCHIERTE SACHGEBIETE (Int. Cl.5)** |
| X | DE-A-2 550 743 (IBM) * Ansprüche 1,2; Abbildungen * | 1,4,6 | |
| | ----- | | F16H B23Q |

Der vorliegende Recherchenbericht wurde für alle Patentansprüche erstellt

| Recherchenort | Abschlußdatum der Recherche | Prüfer |
|---|---|---|
| DEN HAAG | 06 APRIL 1992 | MENDE H. |